Europäisches Patentamt

European Patent Office

Office européen des brevets

(19)

(11) **EP 1 289 318 A1**

(12) **EUROPEAN PATENT APPLICATION**

(43) Date of publication:
05.03.2003 Bulletin 2003/10

(51) Int Cl.$^7$: **H04N 17/00**

(21) Application number: **02017540.2**

(22) Date of filing: **06.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **13.08.2001 US 928971**

(71) Applicant: **Nokia Corporation**
**02150 Espoo (FI)**

(72) Inventor: **Islam, Asad**
**No. 245, Irving, TX 75063 (US)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Method and system for measuring perceptual distortion in images**

(57)     A method and system for detecting and measuring different visually important errors in a reproduced image, as compared to the original image. The visually important errors include the blocking, blurring and ringing artifacts. Using directional filters to process the original and reproduced images into edge images. From the edge images, compute the errors related to true edges and false edges. From the original and reproduced images, compute luminance/color variations in smooth areas. The true edges are edges that are present in the original image. The false edges are edges that are present in the reproduced image but not in the original image.

FIG. 5

EP 1 289 318 A1

**Description**

Field of the Invention

The present invention relates generally to human visual quality criteria and, more particularly, to the measurement of perceptual distortion in images.

Background of the Invention

In image and video coding, mean squared error (MSE) is the commonly used distortion measure for objectively evaluating the fidelity of a distorted image. However, the final arbiter of the quality of a distorted image or video is the human observer.

It is well known that MSE does not correlate well with the subjective assessment of the human visual system (HVS). Therefore, there is a need for an objective distortion measure that matches well with the perceptual characteristics of the HVS. In particular, a perceptual distortion measure (PDM) must be able to detect and identify artifacts in an image that are visually sensitive to the human eye. Various types of visual artifacts that attract human visual attention have been known. These include blocking, blurring and ringing artifacts, among others. In the past, a number of methods have been developed to detect visually sensitive errors in an image focused on finding specific types of artifacts. For example, a method of measuring distortion regarding blocking artifacts in images is disclosed in "A Distortion Measure for Blocking Artifacts in Images Based on Human Visual Sensitivity" (S.A. Karunasekera and N.G. Kingsbury, IEEE Transactions on Image Processing, Vol. 4, No. 6, June 1995). The artifacts regarding ringing and blurring are treated differently in "A Distortion Measure for Image Artifacts Based on Human Visual Sensitivity" (S.A. Karunasekera and N.G. Kingsbury, IEEE International Conference on Acoustics, Speech, and Signal Processing, ICASSP-94, Vol. V, pp. 117-120, 1994). The problem with prior art methods is that a different method is needed for each specific type of artifact. In prior art, a specific method is used to detect the blocking artifacts, another specific method is used to detect the ringing artifacts, etc. Furthermore, prior art methods are sometimes not very successful in detecting some types of errors, such as blurring in images. If most or all visually important artifacts are not considered in the evaluation of the objective quality of an image, then the distortion measure will not be correct and will not match well with the HVS. In view of this fact, prior art solutions to the problem are incomplete. Moreover, because prior art methods are aimed at specific types of artifacts, they are tested only on images that had those specific artifacts in them. Accordingly, while the results presented in those solutions are good when the correct types of image are used, they are not universally accurate or acceptable.

Thus, it is advantageous and desirable to provide a method and system for measuring image distortion regardless of the types of image artifacts.

Summary of the Invention

It is a primary object of the present invention to provide a single methodology to detect most, if not all, types of visually important errors in an image. These visually important errors include blocking, blurring and ringing. More important, the present invention provides a single distortion measure for objectively evaluating the fidelity of a reproduced image, as compared to the original image, wherein the measure is indicative of the artifacts in the reproduced image that are visually sensitive to the human eye, regardless of the specific types of the artifacts. The error detection methodology, according to present invention, is based on finding the common ground that makes all the common artifacts visually sensitive to the human eye.

According to the first aspect of the present invention, a method of evaluating quality of a second image reproduced from a first image, said method comprising the steps of:

obtaining a first edge image from the first image using an edge filtering process;
obtaining a second edge image from the second image using the edge filtering process, wherein each of the first image, the second image, the first edge image and the second edge image comprises a plurality of pixels arranged in a same array of pixel locations, and each of said plurality of pixels has a pixel intensity, and wherein the pixel intensity at a pixel location of the first edge image is indicative of whether an edge is present in the first image at said pixel location, and the pixel intensity at a pixel location of the second edge image is indicative of whether an edge is present in the second image at said pixel location; and
for a given pixel location,
determining a first value indicative of a difference between the pixel intensity of the first edge image and the second edge image, if an edge is present in the first image at said given pixel location;
determining a second value indicative of a difference between the pixel intensity of the first edge image and the second edge image, if an edge is present in the second image but not present in the first image at said given pixel location;

determining a third value indicative of a difference between the pixel intensity of the first image and the second image, if an edge is not present in either the first image or the second image at said given location;

summing the first value, the second value and the third value for providing a fourth value; and

averaging the fourth value over all or part of said array of pixel locations for providing a fifth value as a measure of the quality.

Preferably, information regarding whether an edge is present at a given pixel location is represented in an edge map having a plurality of pixels arranged in the same array of pixel locations as those in the original image.

Preferably, the edge map is a binary bit map such that the pixel intensity at a given pixel is equal to a first value for indicating the presence of an edge and a second value for indicating otherwise. The first value can be 1 and the second value can be 0. Alternatively, the first value is indicative of a Boolean "true" state and the second value is indicative of a Boolean "false" state.

According to the second aspect of the present invention, a system for evaluating quality of a second image reproduced from a first image, said system comprising:

means, responsive to the first image and the second image, for filtering the first image for providing a first edge image, and filtering the second image for providing a second edge image, wherein each of the first image, the second image, the first edge image and the second edge image comprises a plurality of pixels arranged in a same array of pixel locations, and each of said plurality of pixels has a pixel intensity, and wherein the pixel intensity at a pixel location of the first edge image is indicative of whether an edge is present in the first image at said pixel location, and the pixel intensity at a pixel location of the second edge image is indicative of whether an edge is present in the second image at said pixel location;

means, responsive to the first image, the second image, the first edge image and the second edge image, for determining, at a given pixel location,

a first value indicative of a difference between the pixel intensity of the first edge image and the second edge image if an edge is present in the first image at said given pixel location;

a second value indicative of a difference between the pixel intensity of the first edge image and the second edge image, if an edge is present in the second image but not present in the first image at said given pixel location, and

a third value indicative of a difference between the pixel intensity of the first image and the second image, if an edge is not present in either the first image or the second image at said given pixel location;

means, responsive to the first value, the second value and the third value, for summing the first value, the second value and the third value for providing a fourth value; and

means, responsive to the fourth value, for averaging the fourth value over said array of pixel locations for providing a fifth value indicative of a measure of the quality of the second image.

According to the third aspect of the present invention, a method of evaluating quality of an imaging device or an image encoding process capable of reproducing a second image from a first image, said method comprising the steps of:

obtaining a first edge image from the first image using an edge filtering process;

obtaining a second edge image from the second image using the edge filtering process, wherein each of the first image, the second image, the first edge image and the second edge image comprises a plurality of pixels arranged in a same array of pixel locations, and each of said plurality of pixels has a pixel intensity, and wherein the pixel intensity at a pixel location in the first edge image is indicative of whether an edge is present of the first image at said pixel location, and the pixel intensity at a pixel location of the second edge image is indicative of whether an edge is present in the second image at said pixel location; and

for a given pixel location,

determining a first value indicative of a difference between the pixel intensity of the first edge image and the second edge image, if an edge is present in the first image at said given pixel location;

determining a second value indicative of a difference between the pixel intensity of the first edge image and the second edge image, if an edge is present in the second image but not present in the first image at said given pixel location;

determining a third value indicative of a difference between the pixel intensity of the first image and the second image if an edge is not present in either the first image or the second image at said given pixel location;

summing the first value, the second value and the third value for providing a fourth value;

averaging the fourth value over said array of pixel locations for providing a fifth value; and

comparing the fifth value with a predetermined value for determining the quality of the imaging device.

According to the present invention, the imaging device can be a digital or video camera for reproducing an image, an image scanner, an encoder and other image reproduction device.

The present invention will become apparent upon reading the description taking in conjunction with Figures 1 to 5.

Brief Description of the Drawings

Figure 1 is a block diagram illustrating an overall algorithm for computing image errors, according to the present invention.

Figure 2 is a block diagram illustrating the details of the error computation step.

Figure 3a is a block diagram illustrating the computation of errors related to true edges.

Figure 3b is a block diagram illustrating the computation of errors related to false edges.

Figure 3c is a block diagram illustrating the computation of errors related to luminance/color variations in smooth areas in an image.

Figure 4 is a block diagram illustrating a system for measuring the quality of the reproduced images, according to the present invention.

Figure 5 is a flow chart illustrating a method of measuring perceptual distortion in images, according to the present invention.

Detailed Description

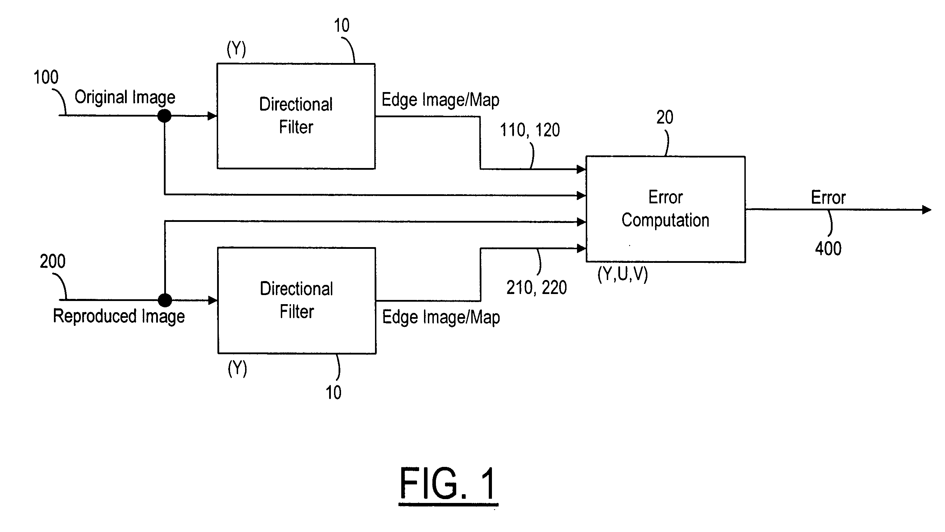

The Human Visual System (HVS) is highly sensitive to edges and errors related to them. Many different kinds of errors that are perceptually important to the HVS can be interpreted in terms of edge information present in the original and reproduced images. Thus, it is preferable to extract detailed edge information from the original and reproduced images in order to detect and measure perceptually important artifacts in the reproduced images. Figure 1 shows a general algorithm for detecting and measuring the perceptually important artifacts in a reproduced image, according to the present invention. The term "distorted image" or "decoded image" is also used herein interchangeably with the "reproduced image". The algorithm takes in as input two entities: a reproduced or decoded image (or frame), of which visual quality is determined by the algorithm, and the original image (or frame) from which the decoded image is derived. The algorithm accepts both color and grayscale images as input. As shown in Figures 1 to 4, the letters Y, U, V in parenthesis besides a block indicate whether the particular module is intended to take just the luminance component (Y) of the image, or both the luminance and chrominance components (Y,U,V) as inputs. As shown in Figure 1, an original image **100** and a reproduced image **200** are passed through directional filtering modules **10** for filtering the images along various directions. The results, which are labeled edge images/maps **110, 120, 210** and **220,** together with the original image **100** and reproduced image **200**, are fed into an error computation module **20** for image distortion evaluation. The computed error is denoted by reference numeral **400**. To extract edge information from the input frames, it is preferred that only the luminance (Y) component be used. It is also preferred that the filtering is performed in eight directions, namely, North, East, South, West, Northeast, Southeast, Southwest and Northwest, using the standard Gradient Masks. The Gradient Masks are also known as the Prewitt Masks, which enhance the edges in specific directions. It should be noted that performing filtering for every pixel in the image along eight different directions can be computationally demanding, especially for large images. In order to reduce the computational complexity, it is possible to use filtering along only four appropriate directions, for example, North, East, Northeast and Southeast. The reduction in the error detection efficiency due to the reduction in filtering directions is usually minimal. Alternatively, it is possible to reduce complexity for large images by filtering only on subsamples of the image instead of the entire image. For example, it is possible to use a subsampling of two in both horizontal and vertical directions and interpolate the edge information to the "missed" pixels.

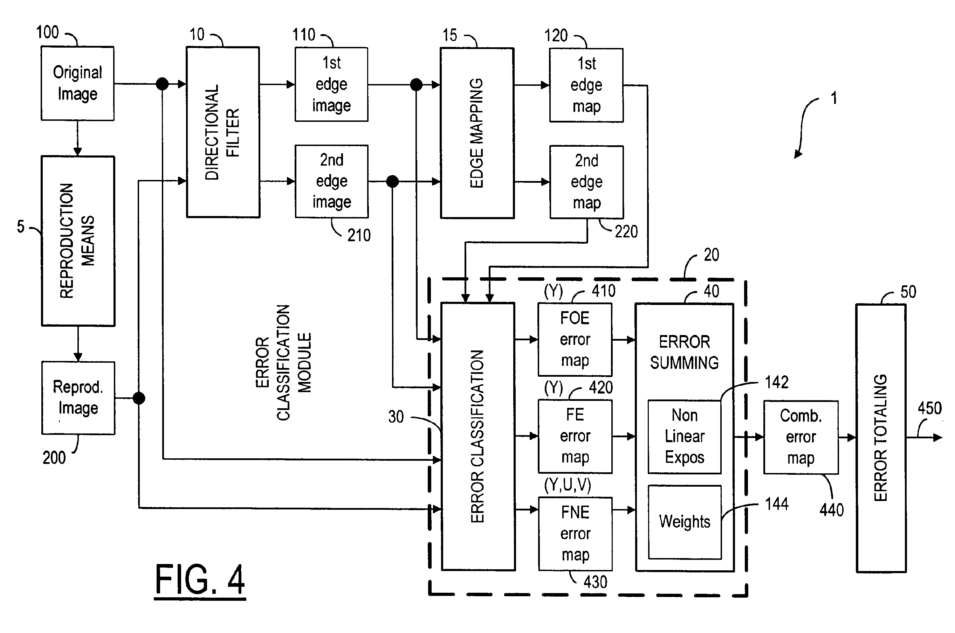

Filtering an image using the gradient masks enhances the edges along specific directions and the result is indicative of the intensity of edges along those directions. In order to generate the edge image containing the edge information, the average of the output of all the filtering operations in different directions for each pixel is obtained. This procedure gives a good measure of the intensity of edges at each pixel location of the image. The edge image derived from the original image **100** is denoted by reference numeral **110**, and the edge image derived from the reproduced image **200** is denoted by reference numeral **210** (see Figure 4). Based on the edge image **110**, an edge map **120** is generated. An edge map is a binary map indicating the key edge locations in the image, using a pre-determined threshold. If the edge intensity, or pixel intensity at a given pixel location in the edge image, exceeds that threshold, it is assumed that an edge is present at that pixel location. Otherwise, the edge is not present at that pixel location. The edge image is a measure of the strength of edges in the image while the edge map indicates the areas in the given image where significant edges are found. The edge map is used later in the algorithm to categorize the different parts of the image into "edges" and "non-edges".

According to the present invention, errors are classified into two main types - those related to edges and those related to non-edges. Based on the edge images and edge maps, it is possible to find different types of edge-related errors. Non-edge related errors can be found from smoother regions of the actual images.

Most of the visually sensitive artifacts in an image are related to edges. This provides a reasonable basis for classifying the visual errors into different categories as follows.

FOE Error

FOE stands for 'Falseness of Original Edges'. This type of error is basically a measure of the preservation of sharpness of edges that are present in the original image. In other words, it measures how well original edges are preserved in the reproduced image. This type of error is visually very perceptible since edges or outlines of objects in an image constitute an important factor for the visual quality of images.

The most common example of this kind of error is the blurring artifact, which is very common in many image/ video coding applications, particularly at low bit rates. Blurred edges in an image are visually quite displeasing and significantly degrade the perceptual quality of an image. The FOE error takes care of blurring and related artifacts in the computation of perceptual error.

FE Error

FE stands for 'False Edges'. This type of error detects false edges in the distorted image that are not present in the original image but show up in the reproduced image. FE error is visually very perceptible since false edges manifest themselves in an image in locations where there are supposed to be no edges at all. False edges constitute one of the most important factors that degrade the visual quality of images and they are visually very displeasing.

Common examples of this kind of error are the blocking, ringing and general edge artifacts. They are quite common in many image/video coding applications. In particular, blocking artifacts are common in block-based image and video compression applications, such as JPEG, at low rates. The FE error takes care of the blocking, ringing and related artifacts in the computation of perception error.

FNE Error

FNE stands for 'False Non-Edges'. This type of error basically detects errors in the smooth regions of the image. FNE errors may not be visually very perceptible since they are not comprised of edge errors but rather smoothly varying errors in the distorted image. Such errors do not always catch appreciable attention of the eye, unless the errors are large in magnitude. It should be noted that if the errors in smooth areas of the image result in edge artifacts in the distorted image, they can usually be detected by the FE error.

Common examples of FNE errors are the errors due to color/contrast changes in the smooth parts of the image. Such errors also occur in image/video coding applications, especially at low rates. For small color changes, the error may not be visible but becomes more prominent as the magnitude of the error increases.

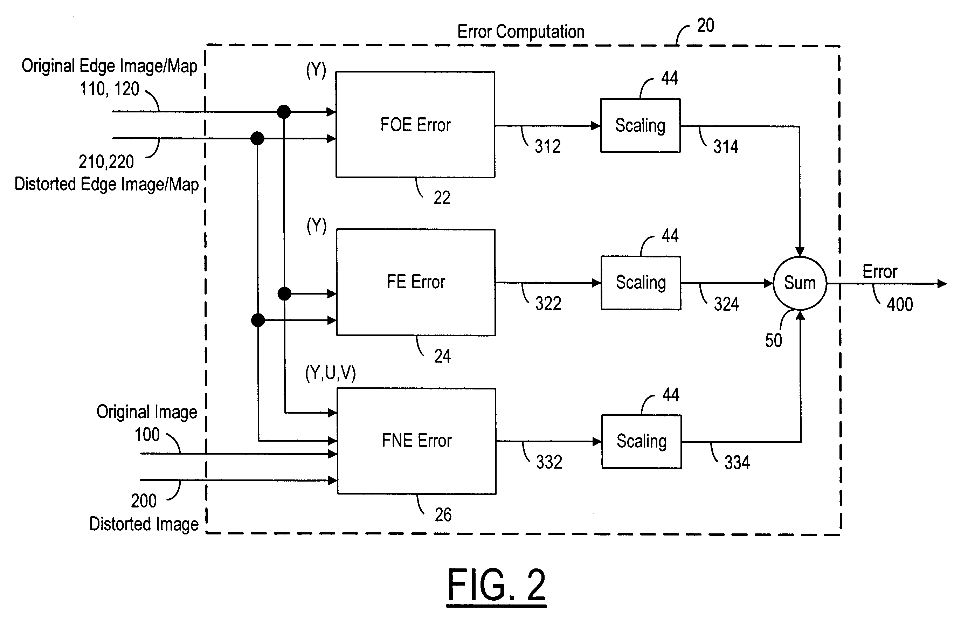

Figure 2 shows the functions within the Error Computation Module **20**. The inputs to the module **20** are the original image or frame **100**, the reproduced image frame **200** and their respective edge images **110**, **210** and edge maps **120**, **220**.

In order to quantify the computation of visual errors, the following notation is used:

$I_o(x,y) \equiv$ pixel intensity at location $(x,y)$ in the original image **100**;

$I_d(x,y) \equiv$ pixel intensity at location $(x,y)$ in the reproduced image **200**;

$E_o(x,y) \equiv$ edge intensity at location $(x,y)$ in the edge image **110** of the original image;

$E_d(x,y) \equiv$ edge intensity at location $(x,y)$ in the edge image **210** of the reproduced image;

$M_o(x,y) \equiv$ edge indicator at location $(x,y)$ in the edge map **120** of the original image;

$M_d(x,y) \equiv$ edge indicator at location $(x,y)$ in the edge map **220** of the reproduced image;

$E_{FOE}(x,y) \equiv$ FOE error at location $(x,y)$ in the reproduced image **200;**

$E_{FE}(x,y) \equiv$ FE error at location $(x,y)$ in the reproduced image **200**; and

$E_{FNE}(x,y) \equiv$ FNE error at location $(x,y)$ in the reproduced image **200.**

It should be noted that $M_o(x,y) = 1$ in the edge map 120 indicates that an edge is present at a pixel location $(x,y)$ in the original image **100,** while $M_o(x, y) = 0$ indicates that an edge is not present at that location. Similar convention is true for $M_d(x,y)$ regarding the reproduced image **200.**
The computation of FOE error is given by:

$$E_{FOE}(x,y) \equiv \begin{cases} |E_o(x,y) - E_d(x,y)|, if\,(x,y) \in D_{FOE} \\ 0, else \end{cases}$$

$$(1)$$

where,

$$D_{FOE} = \{(x,y)|M_o(x,y) = 1\}$$

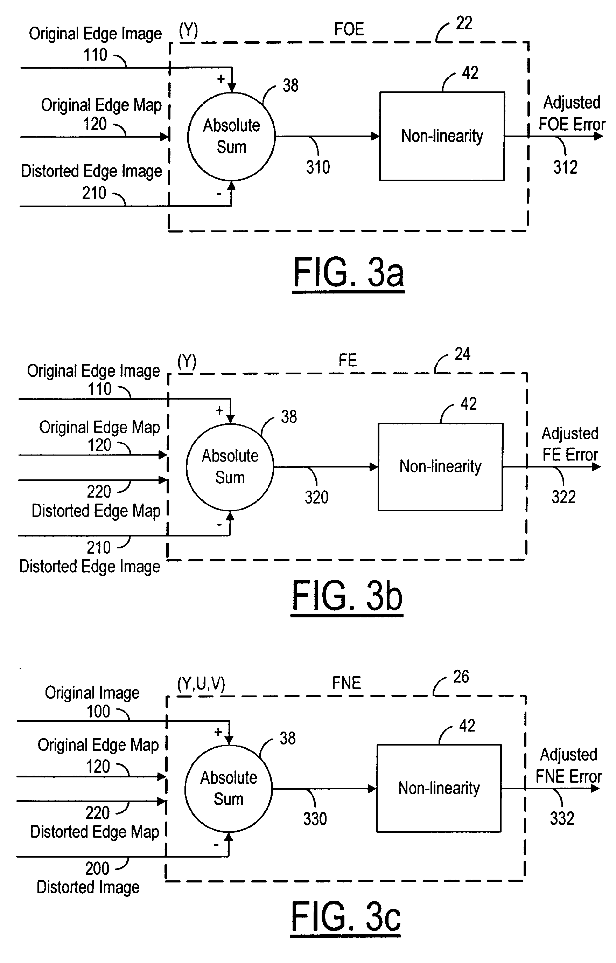

Only for the pixels that belong to the edge locations in the original edge map **120**, is the absolute difference of the pixel intensities in the edge image **110** and the edge image **210** at those locations taken into consideration. The FOE error computation module is denoted by reference numeral **22**. As shown in Figure 3a, only the edge images **110**, **210** and the edge map **120** are needed for FOE error computation. The FOE error computation, according to Eq.1, is carried out by an absolute summing module **38** to provide the absolute difference **310**, or $E_{FOE}(x,y)$, at a pixel location $(x,y)$. The absolute difference **310** is then processed by a non-linearity module **42** to reflect the HVS response to FOE error. The adjusted FOE error, or $(E_{FOE}(x,y))^{\alpha 1}$ is denoted by reference numeral **312**. In general, the more the blurring in the edges, the greater will be the FOE error. It is preferred that that only the luminance (Y) component of the input frames is used in the evaluation of this kind of error.
The FE errors are computed only for edge locations that are present in the distorted image but not in the original image. That is, the errors are computed at pixel locations where the edge map **210** indicates an edge is present but the edge map **120** indicates otherwise. The scenario of false edges over original edges would be automatically covered by the FOE error.
The computation of FE error is given by:

$$E_{FE}(x,y) = \begin{cases} |E_o(x,y) - E_d(x,y)|, if\,(x,y) \in D_{FE} \\ 0, else \end{cases}$$

$$(2)$$

where,

$$D_{FE} = \{(x,y)|M_o(x,y) = 0 \text{ and } M_d(x,y) = 1\}$$

Only for the pixels that belong to the edge locations in the distorted image but do not belong to the original image, is the absolute difference of the pixel intensities in the edge image **110** and the edge image **210** at those locations taken in consideration. The FE error computation module is denoted by reference numeral **24**. As shown in Figure 3b, the edge images **110**, **210** and the edge maps **120**, **220** are needed for FE error computation. The FE error computation, according to Eq.2, is carried out by an absolute summing module **38** to provide the absolute difference **320**, or $E_{FE}(x,y)$, at a pixel location $(x,y)$. The absolute difference **320** is then processed by a non-linearity module **42** to reflect the HVS response to FE error. The adjusted FE error, or $(E_{FE}(x,y))^{\alpha 2}$ is denoted by reference numeral **322**. In general, the higher the intensity of false edges, the greater will be the FE error. It is preferred that only the luminance **(Y)** component of the input frames be used in the evaluation of this kind of error.

The FNE errors are computed only for locations that do not correspond to edges in either the original image **100** or the reproduced image **200**. The computation of FNE error is given by:

$$E_{FNE}(x,y) \equiv \begin{cases} \sum_{luma,chroma} |I_o(x,y) - I_d(x,y)|, if\ (x,y) \in D_{FNE} \\ 0, else \end{cases}$$

$$(3)$$

where,

$$D_{FNE} = \{(x,y) | M_o(x,y) = 0 \text{ and } M_d(x,y) = 0\}$$

Only for the pixels that do not belong to the edge locations in either the original image **100** or the reproduced image **200**, is the absolute difference of the respective original and distorted luminance and chrominance intensities taken into consideration. The FNE error computation module is denoted by reference numeral **26**. As shown in Figure 3c, the edge maps **120, 220** and the original and reproduced images **100, 200** are needed for the computation of FNE errors. The edge images **110, 210** are not needed. The FNE error computation, according to Eq.3, is carried out by an absolute summing module **38** to provide the absolute difference **330**, or $E_{FNE}(x,y)$, at a pixel location $(x,y)$. The absolute difference **330** is then processed by a non-linearity module **42** to reflect the HVS response to FNE error. The adjusted FNE error, or $(E_{FNE}(x,y))^{\alpha 3}$ is denoted by reference numeral **332**. In general, the higher the intensity of false edges, the greater will be the FNE error. It is preferable that both the luminance **(Y)** and chrominance **(U,V)** components of the input frames are used to evaluate errors due to color mismatch.

The adjusted errors **312, 322, 332** are then scaled with appropriate weights to make them compatible to their visual importance. As shown in Figure 2, the adjusted erros are separately scaled by scaling modules **44** to provide scaled errors **314, 324** and **334.** The scaled errors **314, 324, 334** are added up in a summing device **50** to give a combined error **400** at a pixel location $(x,y)$ as follows:

$$E(x,y) = W_1 \cdot (E_{FOE}(x,y))^{\alpha_1} + W_2 \cdot (E_{FE}(x,y))^{\alpha_2} + W_3 \cdot (E_{FNE}(x,y))^{\alpha_3} \qquad (4)$$

where

$W_1, W_2, W_3 \equiv$ respective weights of the errors FOE, FE and FNE

$\alpha_1, \alpha_2, \alpha_3 \equiv$ respective non-linearity associated with the errors FOE, FE and FNE

As shown in Figure 2, the edge image **110** and edge map **120** derived from the original image **100**, and the edge image **210** and edge map **220** derived from the reproduced image **200** are fed to the FOE Error computation module **22,** the FE Error computation module **24** to compute the adjusted FOE error $(E_{FOE}(x,y))^{\alpha 1}$ and the FE error $(E_{FE}(x,y))^{\alpha 2}$, according to Eq.1 and Eq.2, respectively. The edge maps **120, 220,** together with the original image **100** and the reproduced image **200** are fed to the FNE Error computation module **26** to compute the adjusted FNE error $(E_{FNE}(x,y))^{\alpha 3,}$ according to Eq.3. The adjusted FOE error **312,** the adjusted FE error **322** and the adjusted FNE error **332** are scaled by weights $W_1, W_2$ and $W_3$, respectively, by a scaling module **44**. The scaled errors $W_1(E_{FOE}(x,y))^{\alpha 1}$ **314,** $W_2(E_{FE}(x,y))^{\alpha 2}$ **324** and $W_3(E_{FNE}(x,y))^{\alpha 3}$ **334** are fed to a summing module **50** to produce a single error value **400.**

Figure 4 illustrates the system for evaluating the quality of the reproduced image or frame **200**, as well as the quality of an imaging device **5**. The imaging device **5** can be an image or video encoding system. Image and video is almost always compressed before it is stored or transmitted over a network. During coding, an objective distortion measure can be carried out to evaluate the distortions of the image at various rates. The perceptual distortion measure (PDM), based on the total error $E(x,y)$, as shown in Eq.4, can be used as the distortion measure. As shown in Figure 4, the system **1** comprises a directional module **10** to process an original image **100** into a first edge map **110**, and a reproduced image **200** into a second edge map **210**. The system **1** further comprises a mapping module **15** to process the first edge image **110** into a first edge map **120**, and the second edge image **210** into a second edge map **220**. As mentioned earlier, the first and second edge images are binarized using a certain threshold into the first and second edge maps. For example, if the first and second edge images are 8-bit images, it is possible to use a threshold between 64 and 128, for example, to generate the corresponding edge maps. Accordingly, if the pixel intensity of the edge image at a certain pixel location is greater than the threshold, the value of pixel intensity of the corresponding edge map at that pixel location can be set equal to 1 (or a Boolean "true" state). Otherwise, the value of the pixel intensity is set to 0 (or a Boolean "false" state). The original image **100**, the first edge image **110**, the first edge map **120**, the reproduced image **200**, the second edge image **210** and the second edge map **220** are conveyed to the Error Computation module **20** to determine the combined error. It should be noted that each of the original image **100**, the first edge image **110**, the first edge map **120**, the reproduced image **200**, the second edge image **210** and the second edge map **220** comprises a plurality of pixels arranged in the same array of pixel locations. For a given pixel location $(x,y)$, the error computing module **30,** based on Eqs.1 - 3, computes the FOE error $E_{FOE}(x,y)$ **310,** the FE error $E_{FE}(x,y)$ **320,** and the FNE error $E_{FNE}(x,y)$ **330.** With all the pixel locations, the error computing module **30** generates an FOE error map **410,** a FE error map **420,** a FNE error map **430,** each of which comprises a plurality of pixels arranged in the same array of the pixels locations as the original image **100**. After scaling and adjusting for non-linearity by a summing module **40,** a combined error map **440** is obtained. The combined error map **440** comprises a plurality of pixels, arranged in the same array of pixel locations as the original image **100**, and the pixel intensity of the combined error map **440** at a given pixel location is given by Eq.4. In order to obtain a single measure to quantify the performance of the imaging device **5** or express the quality of the reproduced image **200**, it is preferred that a normalized root-mean-squared value of the combined error be computed as follows:

$$< E >= \left[ \left\{ \sum_{x,y} E(x,y) * E(x,y) \right\} / \sum_{x} x \sum_{y} y \right]^{1/2} \tag{5}$$

The mean error $<E>$ is denoted by reference numeral **450.**

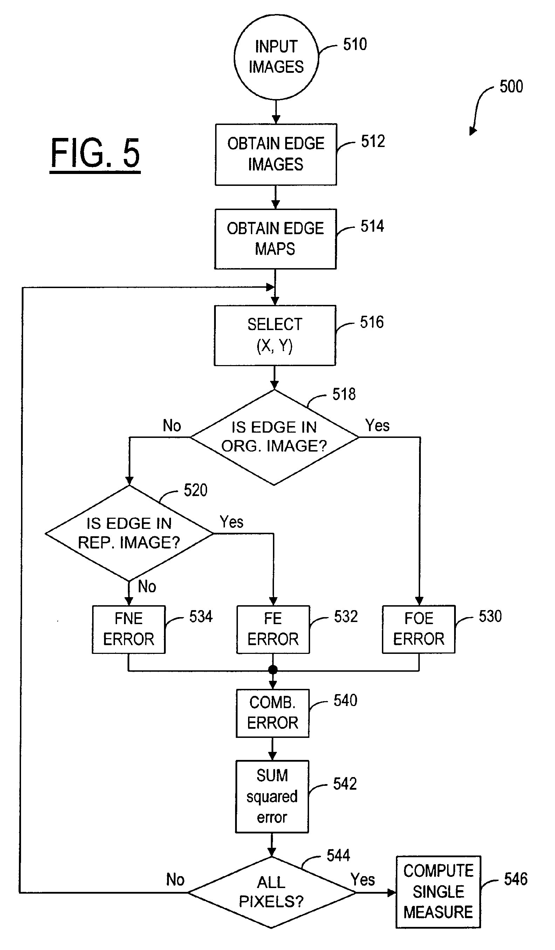

Figure 5 is a flow chart showing the method of detecting and measuring perceptually important artifacts, according to the present invention. As shown in the flow chart **500**, the original and the reproduced images **100**, **200** are provided to the algorithm (Figure 1) or the system 1 (Figure 4) at step **510**. At step **512,** the edge images **110** and **210** are derived from the original and reproduced images **100** and **200**, respectively. At step **514,** the binary edge maps **120** and **220** are obtained from the edge images **110** and **210,** respectively, by using an appropriate threshold. For a given pixel location $(x,y)$, as selected at step **516**. If it is determined at step **518** that an edge is present at the pixel location $(x,y)$ of the original image **100** as indicated by the edge map **120,** then the FOE error at the pixel location $(x, y)$ is computed at step **530,** according to Eq.1. Otherwise the process continues at step **520**. At step **520,** if it is determined that the an edge is present at the pixel location $(x,y)$ of the reproduced image **200** but not in the original image **100,** as indicated by the edge map **220** and the edge map **120,** then the FE error at the pixel location $(x,y)$ is computed at step **532,** according to Eq.2. Otherwise the FNE error at the pixel location $(x,y)$ is computed at step **534,** according to Eq.3. These error values are scaled and non-linearity adjusted, according to Eq.4, to yield a combined error $E(x,y)$ at step **540**. At step **542,** the combined error $E(x,y)$ is squared and the squared value is added to a sum. At step **544,** if it is determined that all the pixel locations have been computed, the square root of the sum is computed and the result is normalized to obtain the single measure $<E>$ at step **546,** according to Eq.5. Otherwise, a new pixel location is selected at step **516** in order to computed another $E(x,y)$.

The optimized weights $W_k$ and non-linear coefficients $\alpha_k$'s to be used in Eq.4 are, in general, difficult to determined because of the subjective nature of the visual quality of images. It has been found that the weight $W_k$ for the FOE error, the FE error and the FNE error can be set to 1.0 while the non-linear coefficients or exponents $\alpha_1$, $\alpha_2$, and $\alpha_3$ for adjusting the FOE error, FE error and FNE error, respectively, can be set equal to 1.05, 1.35 and 1.7, respectively. Preferably, the range for the weight $W_k$ for the FOE error, the FE error and the FNE error can be any value between 0 and 10, while the non-linear coefficient $\alpha_1$ ranges from 0.25 to 2.0; $\alpha_2$ ranges from 1.0 to 3.0, and $\alpha_3$ ranges from 1.0 to 5.0. However, these numbers can be smaller or larger.

The mean error $<E>$ is a measure of quality of a reproduced image or an image reproducing/coding device. When $<E>$ is equal to 0, the reproduced image is identical to the original image, and this is a case of perfect reconstruction. When $<E>$ is equal to or less than 10, the quality of the reproduced image is very good, as compared to the original image. But when *<E>* exceeds a certain larger number, such as 200, the image quality is unsatisfactory. It should be noted, however, that the value of *<E>* varies significantly from one image to another. Not only does *<E>* vary with the contrast and brightness of an image, but it also changes with the objects in the scene. Moreover, <E> will generally increase with the number of bit planes. In general, a small *<E>* is preferred over a large *<E>*. It is possible, however, that the mean error *<E>* is compared to a predetermined value in order to quantify the performance of the image reproducing/coding device or process using one or more selected images. While it is preferred that the mean error *<E>* for an image reproducing/coding device or process is less than 10, a mean error *<E>* in the neighborhood of 100 may be acceptable. Thus, the predetermined value can be smaller than 10 or greater than 100, depending on the usage of the reproduced images.

In summary, the present invention provides a single objective measure that is generated for every pixel in the image is a cumulative measure of all the visually important artifacts in the image, namely, errors related to true edges (FOE), false edges (FE) and (luminance/color) variations in smooth areas (FNE) of the image. Traditionally, mean squared error (MSE) is used to measure the distortions of image at various rates during coding. The present invention uses a perceptual distortion measure (PDM), according to Eq.4, to evaluate the distortions of images.

The PDM would evaluate the distortions of the image at various rates, just as the MSE does. The difference, however, is that the distortions would be correlated to the visual quality of the image as perceived by a human observer. As such, the perceived rate distortion characteristics would be more efficient, resulting in bit rate savings for the coded image.

Another application where this invention could be used is as an evaluation tool in determining the perceptual quality of images. In such case, the PDM, based on the invention, would be used as a stand-alone application. It will be applied on a variety of images to objectively evaluate their quality, as perceived by a typical human observer. The invention is to be used in a typical image or video encoding system. During encoding of images, the encoder allocates bits in an efficient manner so as to achieve rate-distortion optimization for the image being coded. Typically, the rate distortion optimization makes use of the mean-squared-error (MSE) distortion measure. It is possible to measure the fluctuations in the bit rate during the rate-distortion optimization process. The rate fluctuations that occur as a result of using the MSE distortion measure would have a distinct pattern than the pattern achieved for rate fluctuations when using a perceptual distortion measure (PDM) based on the invention. In this way, the algorithm is independent of any particular type of artifact, and is able to cover almost all major types of artifacts, if not all. The major advantages of the present invention include that the algorithm doesn't specifically look for each of these artifacts separately, but the way the algorithm is designed, it is able to detect errors that are perceptually important to human observers.

The present invention, as described in conjunction with Figure 1-4, only the luminance (Y) component of the input frames is used for the computation of FOE and FE errors. However, it is also possible to include the chrominance (U,V) components in the computation if so desired. Furthermore, it is preferred that the single measure **450** (See Figure. 4) is obtained by using Eq.5. However, it is also possible to compute the single measure in a different way or according to Eq. 6 below:

$$< E >= \sum_{x,y} E(x,y) / \sum_{x} x \sum_{y} y \qquad (6)$$

Thus, although the invention has been described with respect to a preferred embodiment thereof, it will be understood by those skilled in the art that the foregoing and various other changes, omissions and deviations in the form and detail thereof may be made without departing from the spirit and scope of this invention.

A method and system for detecting and measuring different visually important errors in a reproduced image, as compared to the original image. The visually important errors include the blocking, blurring and ringing artifacts. Using directional filters to process the original and reproduced images into edge images. From the edge images, compute the errors related to true edges and false edges. From the original and reproduced images, compute luminance/color variations in smooth areas. The true edges are edges that are present in the original image. The false edges are edges that are present in the reproduced image but not in the original image.

**Claims**

1.   A method of evaluating quality of a second image reproduced from a first image, said method comprising the steps of:

obtaining a first edge image from the first image using an edge filtering process;
obtaining a second edge image from the second image using the edge filtering process, wherein each of the first image, the second image, the first edge image and the second edge image comprises a plurality of pixels arranged in a same array of pixel locations, and each of said plurality of pixels has a pixel intensity, and wherein the pixel intensity at a pixel location of the first edge image is indicative of whether an edge is present in the first image at said pixel location, and the pixel intensity at a pixel location of the second edge image is indicative of whether an edge is present in the second image at said pixel location; and
for a given pixel location,

determining a first value indicative of a difference between the pixel intensity of the first edge image and the second edge image, if an edge is present in the first image at said given pixel location;

determining a second value indicative of a difference between the pixel intensity of the first edge image and the second edge image, if an edge is present in the second image but not present in the first image at said given pixel location; and

summing the first value and the second value for providing a summed value indicative of a measure of the quality.

2. The method of claim 1, further comprising the step of determining an averaged value of the summed value over all or part of the array of the pixel locations.

3. The method of claim 1, wherein information regarding whether an edge is present at a given pixel location is represented in an edge map having a plurality of pixels arranged in the same array of pixel locations as those in the original image.

4. The method of claim 3, wherein the edge map is a bit map such that the pixel intensity at a given pixel is equal to a first value for indicating the present of an edge and a second value different from the first value for indicating otherwise.

5. The method of claim 4, wherein the bit map is a binary bit map, and first value is equal to 1 and the second value is equal to 0.

6. The method of claim 4, wherein the bit map is a binary bit map, and the first value represents a Boolean "true" state and the second value represents a Boolean "false" state.

7. The method of claim 2, further comprising the step of comparing the averaged value to a predetermined value for determining whether the quality is satisfactory.

8. The method of claim 1, further comprising the step of determining for the given pixel location a third value indicative of a difference between the pixel intensity of the first image and the second image, prior to the summing step, if an edge is not present in either the first image or the second image at said given pixel location, wherein the summing step also sums the third value, in addition to the first and second values, for providing the summed value.

9. The method of claim 8, further comprising the step of determining an averaged value of the summed value over all or part of the array of the pixel locations.

10. The method of claim 9, further comprising the step of comparing the averaged value to a predetermined value for determining whether the quality is satisfactory.

11. The method of claim 1, wherein the first image is a color image transformable into luminance and chrominance components, and wherein the luminance component is used to provide the first edge image.

12. The method of claim 1, wherein the second image is a color image transformable into luminance and chrominance components, and wherein the luminance component is used to provide the second edge image.

13. The method of claim 1, wherein the summing of the first value and the second value is carried out with weights given to the first value and the second value.

14. The method of claim 8, wherein the summing of the first value, the second value and third value is carried out with weights given to the first value, the second value and the third value.

15. The method of claim 1, further comprising the step of adjusting non-linearity of the first value and the second value prior to the summing step.

16. The method of claim 8, further comprising the step of adjusting non-linearity of the first value, the second value and the third value prior to the summing step.

17. A system for evaluating quality of a second image reproduced from a first image, said system comprising:

means, responsive to the first image and the second image, for filtering the first image for providing a first edge image, and filtering the second image for providing a second edge image, wherein each of the first image, the second image, the first edge image and the second edge image comprises a plurality of pixels arranged in a same array of pixel locations, and each of said plurality of pixels has a pixel intensity, and wherein the pixel intensity at a pixel location of the first edge image is indicative of whether an edge is present in the first image at said pixel location, and the pixel intensity at a pixel location of the second edge image is indicative of whether an edge is present in the second image at said pixel location;

means, responsive to the first image, the second image, the first edge image and the second edge image, for determining, at a given pixel location:

a first value indicative of a difference between the pixel intensity of the first edge image and the second edge image if an edge is present in the first image at said given pixel location; and

a second value indicative of a difference between the pixel intensity of the first edge image and the second edge image, if an edge is present in the second image but not present in the first image at said given pixel location; and

means, responsive to the first value and the second value, for providing a summed value indicative of a measure of the quality based on the first value and the second value.

18. The system of claim 17, further comprising means, responsive to the summed value, for averaging the summed value over said array of pixel locations.

19. The system of claim 17, wherein said determining means further determines at the given pixel location a third value indicative of a difference between the pixel intensity of the first image and the second image, if an edge is not present in either the first image or the second image at said given pixel location; and wherein the providing means is also responsive to the third value and the summed value is also based on the third value.

20. The system of claim 19, further comprising means, responsive to the summed value, for averaging the summed value over said array of pixel locations.

21. The system of claim 19, wherein the filtering means comprises a direction filter to filter the first and second images at a number of different directions for providing a number of filtering results, and pixel intensity at a given pixel location in the first and second edge images is an average value of the filtering results.

22. The system of claim 19, further comprising means for applying weights on the first value, the second value and the third value prior to conveying the first value, the second value and the third value to the providing means.

23. The system of claim 19, further comprising means for adjusting non-linearity on the first value, the second value and the third value prior to conveying the first value, the second value and the third value to the providing means.

24. The system of claim 22, wherein the weights range from 0 to 10.

25. The system of claim 19, wherein the non-linearity of the first value is expressed as an exponent ranging from 0.25 to 2.0.

26. The system of claim 23, wherein the non-linearity of the second value is expressed as an exponent ranging from 1.0 to 3.0.

27. The system of claim 23, wherein the non-linearity of the third value is expressed as an exponent ranging from 1.0 to 5.0.

28. A method of evaluating quality of an imaging device or an image coding process capable of reproducing a second image from a first image, said method comprising the steps of:

    a) obtaining a first edge image from the first image using an edge filtering process;

    b) obtaining a second edge image from the second image using the edge filtering process, wherein each of the first image, the second image, the first edge image and the second edge image comprises a plurality of pixels arranged in a same array of pixel locations, and each of said plurality of pixels has a pixel intensity, and wherein the pixel intensity at a pixel location in the first edge image is indicative of whether an edge is present of the first image at said pixel location, and the pixel intensity at a pixel location of the second edge image is indicative of whether an edge is present in the second image at said pixel location;

    c) determining for a given pixel location,

        a first value indicative of a difference between the pixel intensity of the first edge image and the second edge image, if an edge is present in the first image at said given pixel location; and

        a second value indicative of a difference between the pixel intensity of the first edge image and the second edge image, if an edge is present in the second image but not present in the first image at said given pixel location;

    d) summing the first value and the second value for providing a summed value for the given pixel location;

    e) averaging the summed value over at least a part of said array of pixel locations for providing an averaged value; and

    f) comparing the averaged value with a predetermined value for determining the quality of the imaging device.

29. The method of claim 28, wherein the determining step (c) further determines a third value indicative of a difference between the pixel intensity of the first image and the second image if an edge is not present in either the first image or the second image at said given pixel location, and wherein the summing step further summing the third value, in addition to the first and second values, for providing the fourth value.

30. The method of claim 28, wherein the imaging device is a digital camera.

31. The method of claim 28, wherein the imaging device is a video camera.

32. The method of claim 28, wherein the imaging device is an image encoder.

33. The method of claim 28, wherein the imaging device is an image scanner.

34. The method of claim 29, wherein the predetermined value ranges from 10 to 100.

35. The method of claim 29, wherein the fifth value is a root-mean-squared average of the summed value.

FIG. 1

Error Computation — 20

Original Edge Image/Map
110, 120

210,220
Distorted Edge Image/Map

(Y)

FOE Error
22

312

Scaling — 44

314

(Y)

FE Error
24

322

Scaling — 44

324

Sum

Error

400

50

(Y,U,V)

Original Image
100

200
Distorted Image

FNE Error
26

332

Scaling — 44

334

FIG. 2

EP 1 289 318 A1

Original Edge Image (Y)  FOE  22
110

Original Edge Map    38    42
120    +

     Absolute   Non-linearity  Adjusted
     Sum        FOE Error

Distorted Edge Image   310      312
210    −

## FIG. 3a

Original Edge Image (Y)  FE  24
110

Original Edge Map    38    42
120    +

     Absolute   Non-linearity  Adjusted
220    Sum        FE Error
Distorted Edge Map

       320      322
210    −
Distorted Edge Image

## FIG. 3b

Original Image (Y,U,V)  FNE  26
100

Original Edge Map    38    42
120    +

     Absolute   Non-linearity  Adjusted
220    Sum        FNE Error
Distorted Edge Map

       330      332
200    −
Distorted Image

## FIG. 3c

FIG. 4

# FIG. 5

INPUT IMAGES — 510

500

OBTAIN EDGE IMAGES — 512

OBTAIN EDGE MAPS — 514

SELECT (X, Y) — 516

IS EDGE IN ORG. IMAGE? — 518

No     Yes

IS EDGE IN REP. IMAGE? — 520

Yes

No

FNE ERROR — 534

FE ERROR — 532

FOE ERROR — 530

COMB. ERROR — 540

SUM squared error — 542

ALL PIXELS? — 544

No     Yes

COMPUTE SINGLE MEASURE — 546

**European Patent Office**

**EUROPEAN SEARCH REPORT**

Application Number

EP 02 01 7540

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 940 996 A (KONINKLIJKE KPN N.V.) 8 September 1999 (1999-09-08) * page 4, line 43 - page 8, line 32 * | 1,17,28 | H04N17/00 |
| A | WO 00 48407 A (BRITISH TELECOMMUNICATIONS PUBLIC LIMITED COMPANY) 17 August 2000 (2000-08-17) * page 3, line 21 - page 14, line 5 * | 1,17,28 | |
| A | WO 99 43161 A (NDS LIMITED) 26 August 1999 (1999-08-26) * page 5, line 17 - page 6, line 25 * | 1,17,28 | |
| A | US 5 329 379 A (RODRIGUEZ A. ET AL) 12 July 1994 (1994-07-12) * column 3, line 10 - column 8, line 64 * | 1,17,28 | |
| A | US 5 446 492 A (WOLF S. ET AL) 29 August 1995 (1995-08-29) * column 3, line 15 - column 11, line 52 * | 1,17,28 | |
| A | EP 0 827 346 A (FUJI XEROX CO. LTD.) 4 March 1998 (1998-03-04) * column 27, line 24 - line 41 * * column 30, line 14 - line 36 * | 1,17,28 | TECHNICAL FIELDS SEARCHED (Int.Cl.7) H04N |

The present search report has been drawn up for all claims

| Place of search | Date of completion of the search | Examiner |
|---|---|---|
| THE HAGUE | 27 November 2002 | Verschelden, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 01 7540

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2002

| Patent document cited in search report | | Publication date | Patent family member(s) | | Publication date |
|---|---|---|---|---|---|
| EP 0940996 | A | 08-09-1999 | EP | 0940996 A1 | 08-09-1999 |
| | | | AT | 213378 T | 15-02-2002 |
| | | | AU | 3328299 A | 20-09-1999 |
| | | | CA | 2322219 A1 | 10-09-1999 |
| | | | DE | 69803830 D1 | 21-03-2002 |
| | | | DE | 69803830 T2 | 12-09-2002 |
| | | | WO | 9945715 A1 | 10-09-1999 |
| | | | EP | 1059004 A1 | 13-12-2000 |
| WO 0048407 | A | 17-08-2000 | EP | 1151618 A1 | 07-11-2001 |
| | | | WO | 0048407 A1 | 17-08-2000 |
| WO 9943161 | A | 26-08-1999 | AU | 2629999 A | 06-09-1999 |
| | | | WO | 9943161 A1 | 26-08-1999 |
| | | | ZA | 9801308 A | 20-08-1999 |
| US 5329379 | A | 12-07-1994 | NONE | | |
| US 5446492 | A | 29-08-1995 | US | 5596364 A | 21-01-1997 |
| EP 0827346 | A | 04-03-1998 | JP | 3116994 B2 | 11-12-2000 |
| | | | JP | 10075369 A | 17-03-1998 |
| | | | EP | 0827346 A2 | 04-03-1998 |
| | | | US | 5991458 A | 23-11-1999 |

For more details about this annex : see Official Journal of the European Patent Office, No. 12/82